# EUROPÄISCHE PATENTANMELDUNG

(11) **EP 1 079 181 A2**
(43) Veröffentlichungstag der Anmeldung: **28.02.2001**
(21) Anmeldenummer: 00810748.4
(22) Anmeldetag: 23.08.2000
(51) Int. Cl.: F24D 3/16, F24D 3/12

(54) **Flächenheizelement zur Erstellung einer Boden- oder Deckenheizung**

(30) Priorität: 27.08.1999 CH 157599
(71) Anmelder: Rimle, Wilhelm, 8272 Ermatingen (CH)
(72) Erfinder: Rimle, Wilhelm, 8272 Ermatingen (CH)
(74) Vertreter: Patentanwaltsbüro Feldmann AG

(57) **Zusammenfassung**

Es wird vorgeschlagen, ein Flächenheizelement (1) so zu gestalten, dass am Vorlauf- oder Rücklaufstrang (3, 4) Heizröhren angebracht werden, die eine achssymmetrische (a) Schlaufe (2) formen. Jede Schlaufe (2) hat einen mäandernden vor- und rücklaufenden Abschnitt (22, 24), die über einen Verbindungsabschnitt (23) zusammenhängen. Die mäandernden Abschnitte (22, 24) sind durch vor- und rücklaufende Distanzabschnitte (21, 25) auf dem Vor- beziehungsweise Rücklaufstrang (3, 4) verbunden.

## Beschreibung

Die vorliegende Erfindung betrifft ein Flächenheizelement zur Erstellung einer Boden- oder Deckenheizung mit einem Vorlaufstrang und einem Rücklaufstrang aus Metallrohr. Die Erfindung betrifft ferner ein Heizrohr eines Flächenheizelementes zur Erstellung einer Boden- oder Deckenheizung gemäss dem Oberbegriff des Patentanspruches 10.

Boden- oder Deckenheizungen sind seit den 50er Jahren bekannt. Während anfänglich die Flächenheizelemente der Deckenheizungen einem Rohrradiator gleich gestaltet waren und direkt an der Decke befestigt wurden, kamen später Flächenheizelemente auf den Markt, bei denen ein Heizrohr mäandernd verlaufend in ein Fertigbetonelement eingegossen wurde und isoliert als Flächenheizelement einer Wand- oder Bodenheizung verlegt wurde. Bodenheizungen, bei denen ein Rohrleitungssystem aus Metallrohren über einer Trittschalldämmung angebracht wurde und danach mit einem Zementmörtel als Unterlagsboden überdeckt wurde, kamen erst später auf den Markt. Diese einfachen an Ort und Stelle schweisstechnisch hergestellten Heizelemente wurden aus lauter Rohrabschnitten zusammengefügt und bestanden somit meist aus lauter rechteckigen Abschnitten. Erst später wurden Flächenheizelemente auf der Baustelle erstellt, die aus geraden Abschnitten und vorgefertigten Bogenabschnitten zusammengeschweisst wurden. Den eigentlichen Durchbruch haben Bodenheizungen jedoch erst durch die Verwendung von Kunststoffrohren erreicht. Im wesentlichen haben sich diese Kunststoffrohre zur Bildung von Flächenheizelementen in verschiedener Hinsicht durchaus bewährt. Zum ersten besteht ein grosser Vorteil darin, dass die Erstellung der Flächenheizelemente ausserordentlich preiswert ist. Auch die Flexibilität bezüglich der Gestaltung ist ein Pluspunkt der Flächenheizelemente, die aus Kunststoffrohren gefertigt sind. Bei dieser Gestaltung ging man üblicherweise von einem zentralen Ventilkasten pro Stockwerk aus und führte beliebig verlaufende Schlaufen vom Verteilventilkasten aus zu den gewünschten Räumen.

Neben den erwähnten Vorteilen sind aber auch diverse Nachteile bekannt, die man aber bisher bewusst in Kauf genommen hat. Nach wie vor ist die Lebensdauer der verschiedenen verwendeten Kunststoffrohren nicht bekannt, und die möglicherweise auftretenden Langzeitschäden bilden ein unbekanntes Risiko. Es kommt auch immer wieder vor, dass in die Rohrleitungen von Flächenheizelementen gebohrt wird. Während man die Metallrohre der früheren Flächenheizelemente mit bekannten Mitteln detektieren konnte, ist dies bei Kunststoffrohren sehr viel schwieriger. Werden folglich Arbeiten fällig, bei denen im Boden oder in der Decke gebohrt werden muss, ist die Gefahr, in eine Kunststoffleitung zu bohren, wesentlich grösser als jene in ein Metallrohr zu bohren. Sogar falls eine Boden- oder Deckenheizung leck gebohrt worden ist, so lässt sich ein Metallrohr schweisstechnisch besser und sicherer wieder verschliessen als ein entsprechendes Kunststoffrohr.

Ein weiterer Nachteil der Kunststoffrohre zur Erstellung von Boden- oder Deckenheizungen besteht darin, dass das Kunststoffrohr in kurzen Abständen auf der Fläche befestigt werden muss, auf der sie verlegt wird, damit beim nachträglichen Aufbringen des Unterlagbodens die Rohre im Zement beziehungsweise Beton nicht aufschwimmen.

Während die früheren aus Metallrohren hergestellten Flächenheizelemente an entsprechenden Vorlauf- bzw. Rücklaufstrang angeschlossen worden sind, ist dies bei den Flächenheizelementen, die mit Kunststoffrohren erstellt worden sind, nicht bekannt. Die Ventil- und Verteilkasten sind direkt am Steig- bzw. Fallstrang angeschlossen, und von dem Verteilkasten aus verlaufen die Kunststoffrohrschlaufen abzweigungsfrei als geschlossene Schlaufen. Entsprechend entstehen Bereiche in der Nähe der Verteilkästen mit hoher Dichte an Heizrohren, obwohl in jenem Bereich keineswegs unbedingt eine besonders hohe Heizleistung gefordert ist. Bei der Verteilung unter Verwendung vom Vorlauf- und Rücklaufstrang lassen sich solche Konzentrationen vermeiden.

Letztlich sei auch noch darauf hingewiesen, dass Metallrohre selbstverständlich eine erheblich bessere Wärmeleitfähigkeit aufweisen als Kunststoffrohre. Während dies bei den früheren Heizungen, die mit relativ hohen Temperaturen betrieben wurden, keine wesentliche Rolle spielte, ist dies bei den heute sich verbreitenden Niedertemperaturheizungen, die mit Wärmepumpen betrieben werden, von ausserordentlicher Bedeutung.

Es ist daher die Aufgabe der vorliegenden Erfindung, ein Flächenheizelement zur Erstellung einer Boden- oder Deckenheizung gemäss Oberbegriff des Patentanspruches 1 zu schaffen, bei dem wiederum auf die Vorteile der traditionellen Heizsystemen mit Metallrohren zurückgegriffen werden kann, wobei gleichzeitig eine Lösung aufgezeigt wird, die eine teilweise Vorfabrikation erlaubt und so im Vergleich zu den traditionellen Flächenheizelementen aus Metallrohren die Schweissarbeit auf der Baustelle reduziert.

Aus den abhängigen Ansprüchen gehen des weiteren vorteilhafte Ausgestaltungsformen hervor, die eine Optimierung der Verlegung erlauben und insbesondere verschiedene Verlegungsdichten zu erstellen ermöglichen.

Um eine besonders schnelle Verlegung mit einem hohen Grad der Vorfertigung zu erreichen, können mehrere Rohrschlaufen über Vorlauf- und Rücklaufstrang miteinander verbunden zu einer Einheit angeboten werden. Es ist jedoch auch möglich, lediglich das Heizrohr in seiner erfindungsgemässen Ausgestaltung anzubieten, so dass aus diesem ein Flächenheizelement vor Ort erstellt werden kann. Diese Lösung ist im Anspruch 10 definiert.

In der Zeichnung ist ein bevorzugtes Ausführungsbeispiel des erfindungsgemässen Flächenheizelementes sowie des erfindungsgemäss gestalteten Heizrohres dargestellt und anhand der nachfolgenden Beschreibung erläutert.

Es zeigt:
- Figur 1: ein Flächenheizelement mit drei achssymmetrischen Schlaufen, die an einem gemeinsamen Vorlauf- und Rücklaufstrang angeschlossen sind.
- Figur 2: zeigt ein Heizrohr in der Form einer achssymmetrischen Schlaufe, die zur Bildung eines Flächenheizelementes gemäss der Erfindung geeignet ist.

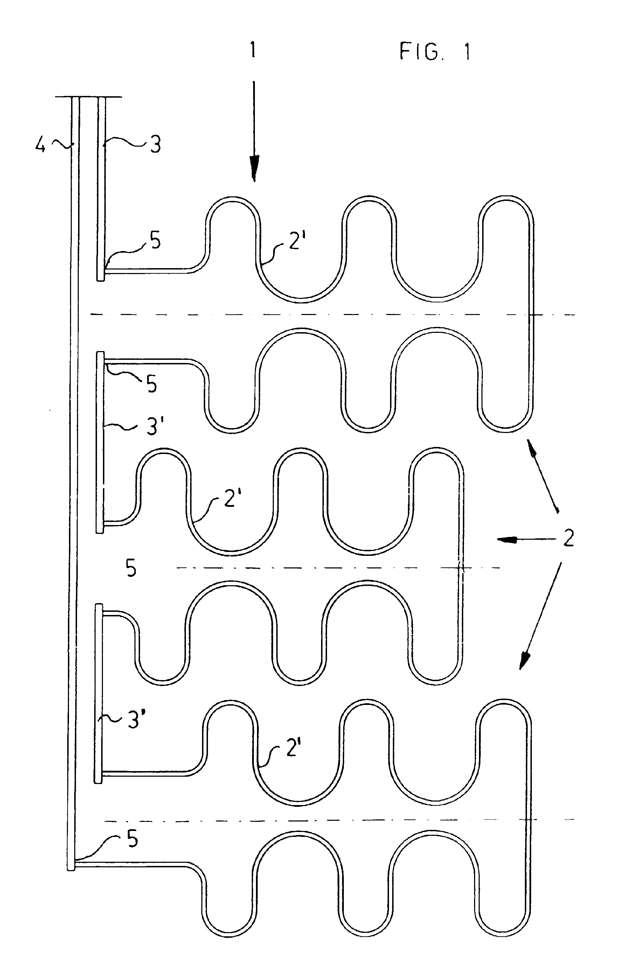

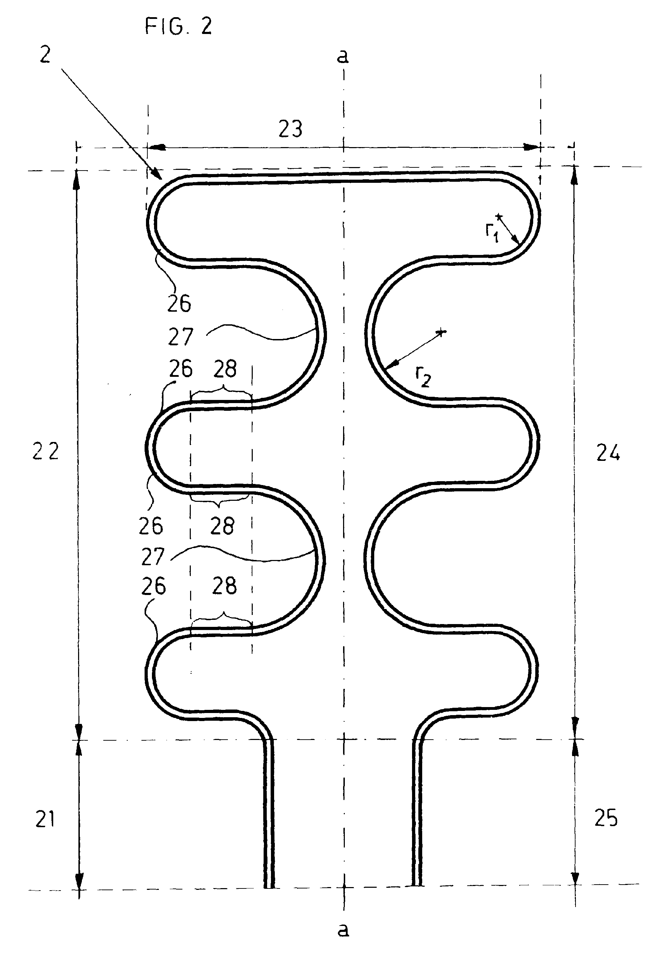

In der Figur 1 ist ein Ausführungsbeispiel des erfindungsgemässen Flächenheizelementes dargestellt. Das Flächenheizelement ist insgesamt mit der Bezugszahl 1 bezeichnet. Das Flächenheizelement 1 wird gebildet aus einer beliebigen Zahl von Schlaufen 2, deren genaue Ausbildung nachfolgend mit Bezug auf die Figur 2 beschrieben wird. Die Schlaufen 2 sind in Serie hintereinander am Vorlaufstrang 3 angeschlossen. Der Vorlaufstrang 3 ist im Bereich jeder Schlaufe unterbrochen, so dass zwangsläufig das gesamte Volumen des Wärmetransportmediums, welches über den Vorlaufstrang 3 zugeführt wird, durch die Schlaufe 2 hindurchlaufen muss. Prinzipiell könnte das Flächenheizelement aus lediglich einer einzigen Schlaufe 2 bestehen. Im dargestellten Beispiel sind es drei solche Schlaufen. Das Ende einer Schlaufe ist mit dem Anfang der nächsten Schlaufe über einen Vorlaufstrangabschnitt 3' verbunden. Lediglich die in Vorlaufrichtung letzte Schlaufe 2 ist rücklaufseitig direkt mit dem Rücklaufstrang 4 verbunden. Die Verbindungen zwischen der jeweiligen Schlaufe 2 und dem Vorlaufstrang 3 beziehungsweise den Vorlaufstrangabschnitten 3' beziehungsweise dem Rücklaufstrang 4 können verschieden ausgebildet sein. In der dargestellten Version sind diese Verbindungen 5 als geschweisste Verbindungen dargestellt. Selbstverständlich können jedoch diese Verbindungen auch mittels entsprechenden Heizrohrmuffen hergestellt sein.

Wegen der speziellen Ausgestaltung der Schlaufen 2 lassen sich diese auch näher zusammengeschoben wie hier dargestellt anordnen. Dies ist praktisch lediglich von der Länge der dazwischen vorhandenen Vorlaufstrangabschnitte 3' abhängig. Bedingung, dass dies möglich ist, ist selbstverständlich die geometrische Ausgestaltung des Heizrohres 2', wobei die Mäanderform der Heizrohre 2' ein Ineinandergreifen zulassen muss. Die Mäanderform ist jedoch keineswegs beschränkt auf die hier dargestellte Form. Auch andere wellenförmige Anordnungen ohne parallele Abschnitte sind ohne weiteres denkbar. Auch die Verbindungsabschnitte 23 der Schlaufen 2 brauchen keineswegs geradlinig gestaltet zu sein, sondern können an sich gewölbt oder andersartig gekrümmt verlaufend sein.

Während man im Normalfall vorgefertigte Flächenheizelemente 1, wie in der Figur 1 dargestellt ist, auf die Baustelle bringen wird und sozusagen nur noch die Vor- und Rücklaufstränge 3, 4 an die entsprechenden Sammelleitungen anhängen muss, ist es selbstverständlich auch möglich, die Vor- und Rücklaufstränge bzw. die Vorlaufstrangabschnitte 3' bauseitig abzulängen und zu verlegen, wobei lediglich vorgefertigte Heizrohre 2' mit der entsprechenden Geometrie auf der Baustelle angeliefert werden.

Ein erfindungsgemäss schlaufenförmig gestaltetes Heizrohr 2' ist in der Figur 2 im Detail dargestellt. In Durchlaufrichtung des Heizmediums sind dabei die folgenden Abschnitte erkennbar: An den Vorlaufstrang 3, der in der Figur 2 nicht dargestellt ist, folgt als erstes ein vorlaufender Distanzabschnitt 21. Die Distanzabschnitte 21 zweier benachbarter Schlaufen 2 können gleich lang sein oder wie in Figur 1 dargestellt unterschiedliche Längen aufweisen. Bezüglich der Längen dieser Distanzabschnitte wird nachfolgend noch eingegangen. Sie beeinflussen die möglichen Verlaufsmuster und die Dichte der verlegten Heizrohrschlaufen. Dem vorlaufenden Distanzabschnitt 21 folgt ein vorlaufender, mäandernder Abschnitt 22. Die hier dargestellte wellenförmige Mäanderform ist eine besonders bevorzugte Variante, ohne dass jedoch anders gestaltete mäanderförmige Abschnitte ausgeschlossen wären. Vom Ende des mäanderförmig verlaufenden, vorlaufenden Abschnitt 22 verläuft ein hier gerade gestalteter Verbindungsabschnitt 23 zu einem rücklaufenden, mäanderförmig verlaufenden Abschnitt 24. Am Ende dieses mäanderförmig verlaufenden Abschnittes 24 schliesst dann ein rücklaufender Distanzabschnitt 25 an, über den eine Verbindung entweder mit einem Vorlaufstrangabschnitt 3' oder mit dem Rücklaufstrang 4 erfolgt. Wird der Distanzabschnitt 25 an einem weiteren Abschnitt 3' des Vorlaufstranges 3 angeschlossen, so ist die Länge des Distanzabschnittes 25 gleich der Länge des Distanzabschnittes 21. Wird jedoch der Distanzabschnitt 25 an den Rücklaufstrang 4 angeschlossen, so sind die Längen der beiden Distanzabschnitte 21 und 25 unterschiedlich, wie dies bei der endständigen Schlaufe 2 des Flächenheizelementes 1 in der Figur 1 ersichtlich ist.

Die Schlaufen 2 sind länglich gestaltet und können im Prinzip eine beliebige Länge aufweisen. Die Schlaufen 2 sind achssymmetrisch zu einer mittigen Längsachse a. Bei der hier dargestellten, bevorzugten Ausführungsform ist sowohl der vorlaufende mäandernde Abschnitt 22 als auch der rücklaufende mäandernde Abschnitt 24 aus Halbkreisbögen zusammengestellt. Die halbkreisförmigen, nach aussen gerichteten Teilabschnitte 26 haben eine Radius r₁. Die nach innen gerichteten halbkreisförmigen Teilabschnitte 27 haben einen Radius r₂. Die Angaben nach innen gerichtet beziehungsweise nach aussen gerichtet beziehen sich immer auf in Blickrichtung von der Symmetrieachse a aus gesehen. Selbstverständlich könnten die Radien r₁ und r₂ gleich gross sein. Vorzugsweise wählt man die Radien jedoch so, dass die bezüglich der Symmetrieachse a nach aussen gerichteten halbkreisförmigen Abschnitte 26 kleinere Radien r₁ haben als die nach innen gerichteten halbkreisförmigen Abschnitte mit den grösseren Radien r2. Für eine optimale Wärmeverteilung ist es besonders vorteilhaft, wenn das Verhältnis der beiden Radien r₁:r₂ = 1:2 entspricht. In diesem Falle können die nach aussen gerichteten halbkreisförmigen Abschnitte 26 einer Schlaufe 2 in den Raum eingreifen, der durch die nach innen gerichteten halbkreisförmigen Teilabschnitte 27 gebildet wird. Gleichzeitig bleibt der Abstand zwischen den Rohren mindestens annähernd etwa gleich gross. Das Ineinandergreifen solcher Schlaufen 2 lässt sich noch variieren, wenn man zwischen den halbkreisförmigen Teilabschnitten 26 und 27 zweier benachbarter unterschiedlicher halbkreisförmiger Teilabschnitte noch ein geradlinig verlaufendes Rohrstück 28 vorsieht.

Auch der Abstand zwischen zwei achssymmetrisch einander gegenüberliegenden nach innen gerichteten halbkreisförmigen Teilabschnitten 27 kann variiert werden. Dies ist praktisch davon abhängig, wie lange man den Verbindungsabschnitt 23 gestaltet. Letztlich kann auch der Abstand zwischen dem vorlaufenden und dem rücklaufenden Distanzabschnitt 21, 25 unterschiedlich gestaltet sein. Mit den Heizrohrschlaufen gemäss der Figur 2 kann ein Heizungsfachmann mit relativ geringem Schweissaufwand und mit hoher Verlegefreiheit Flächenheizelemente nach eigenem Gutdünken bilden. Bei grösseren Überbauungen mit mehrfach gleichen Raumaufteilungen wird man jedoch eher von fertigen Flächenheizelementen 1 ausgehen, wie diese in der Figur 1 dargestellt sind. Ein solches einstückiges Flächenheizelement kann auch durch ein einziges schweissstellenfreies Rohr gebildet werden. Dies kann durch eine computergesteuerte Biegeanlage geschehen, die praktisch aus einem Zimmergrundriss die dem Wärmebedarf entsprechende optimale Verlegung ausrechnet und in die hier vorgeschriebene Form bringt, indem sie die Biegeanlage entsprechend steuert.

Je nach Bedarf können dann auch am Rücklaufstrang 4 Heizschlaufen angeschlossen sein, wobei dann eben der Rücklaufstrang 4 bezüglich den Heizrohrschlaufen 2 funktional ebenfalls ein Vorlaufstrang ist.

## Patentansprüche

1. Flächenheizelement (1) zur Erstellung einer Boden- oder Deckenheizung mit einem Vorlaufstrang (3) und einem Rücklaufstrang (4) aus Metallrohr, dadurch gekennzeichnet, dass am Vor- und Rücklaufstrang (3,4) mindestens ein metallisches Heizrohr (2') angeschlossen ist, das so verlaufend gestaltet ist, dass mindestens eine bezüglich einer Achse (a) symmetrisch verlaufende Schlaufe (2) vorhanden ist, die von einem Vor- oder Rücklaufstrang (3, 4) beginnend über einen vorlaufenden Distanzabschnitt (21) in einen vorlaufenden mäandernden Abschnitt (22) und über einen Verbindungsabschnitt (23) in einen symmetrisch zur erwähnten Achse rücklaufenden mäandernden Abschnitt (24) zum einen rücklaufenden Distanzabschnitt (25) übergeht, der schliesslich direkt oder indirekt mit dem Rücklaufstrang in Verbindung steht.

2. Flächenheizelement nach Patentanspruch 1, dadurch gekennzeichnet, dass jeder mäandernde Abschnitt aus halbkreisförmigen Teilabschnitten besteht, wobei die Durchmesser der bezüglich der Symmetrieachse (a) nach aussen gerichteten halbkreisförmigen Teilabschnitte (26) einen kleineren Radius (r₁) haben als der Radius (r₂) der bezüglich der Symmetrieachse nach innen gerichteten halbkreisförmigen Teilabschnitte (27).

3. Flächenheizelement nach Patentanspruch 2, dadurch gekennzeichnet, dass das Verhältnis der Radien (r₁, r₂) bezüglich der Symmetrieachse (a) nach aussen gerichteten halbkreisförmigen Teilabschnitten (26) zu den nach innen gerichteten Teilabschnitten (27) sich wie 1:2 verhält.

4. Flächenheizelement nach Patentanspruch 2, dadurch gekennzeichnet, dass zwischen je einem bezüglich der Symmetrieachse (a) nach aussen (26) und einem direkt nachfolgenden nach innen gerichteten halbkreisförmigen Teilabschnitt (27) je ein gerade verlaufender Rohrabschnitt (28) angeordnet ist.

5. Flächenheizelement nach Patentanspruch 1, dadurch gekennzeichnet, dass mehrere symmetrische Schlaufen (2) in Serie hintereinander angeordnet sind, wobei die Distanzabschnitte (21, 25) zweier aufeinander folgender Schlaufen (2) unterschiedlich lang sind.

6. Flächenheizelemente nach Patentanspruch 3, dadurch gekennzeichnet, dass mehrere symmetrische Schlaufen (2) in Serie hintereinander angeordnet sind, wobei die Distanzabschnitte (21, 25) zweier aufeinander folgender Schlaufen sich in der Länge um den Radius der grösseren bezüglich der Symmetrieachse (a) nach innen gerichteten halbkreisförmigen Teilabschnitte (27) unterscheiden.

7. Flächenheizelement nach Patentanspruch 5, dadurch gekennzeichnet, dass jeweils zwei benachbarte Schlaufen (2) so nahe nebeneinander angeordnet sind, dass die nach aussen gerichteten halbkreisförmigen Teilabschnitte (26) der einen Schlaufe in die nach innen gerichteten halbkreisförmigen Teilabschnitte (27) der benachbarten Schlaufe eingreifen.

8. Flächenheizelement nach Patentanspruch 1, dadurch gekennzeichnet, dass die Verbindung (5) zwischen Heizrohr (2') und Vor- beziehungsweise Rücklaufstrang (3, 4) geschweisst ist.

9. Flächenheizelement nach Patentanspruch 1, dadurch gekennzeichnet, dass die Verbindung (5) zwischen Heizrohr (2') und Vor- beziehungsweise Rücklaufstrang (3, 4) mittels Muffen oder dergleichen erstellt ist.

10. Heizrohr eines Flächenheizelementes zur Erstellung einer Boden- oder Deckenheizung, wobei das Heizrohr (2') eine bezüglich einer Symmetrieachse symmetrische Schlaufe bildet, dadurch gekennzeichnet, dass die Schlaufe (2) von einem vorlaufenden Distanzabschnitt (21) in einen vorlaufenden mäandernden Abschnitt (22) und über einen Verbindungsabschnitt (23) in einen symmetrisch zur erwähnten Achse (a) rücklaufenden mäandernden Abschnitt (24) zum rücklaufenden Distanzabschnitt (25) übergeht, wobei die beiden mäandernden Abschnitte (22, 24) aus halbkreisförmigen Teilabschnitten (26, 27) bestehen, wobei das Verhältnis der bezüglich der Symmetrieachse (a) nach aussen gerichteten Halbkreise zu den nach innen gerichteten Halbkreisen sich wie 1:2 verhält, und dass ferner zwischen je einem nach innen gerichteten und dem nachfolgenden nach aussen gerichteten Halbkreis ein gerade verlaufender Rohrabschnitt (28) angeordnet ist.
